# EUROPEAN PATENT SPECIFICATION

(11) **EP 3 445 172 B1**
(45) Date of publication and mention of the grant of the patent: **30.09.2026**
(21) Application number: 17785212.6
(22) Date of filing: 21.04.2017
(51) Int. Cl.: A01N 43/90, A01M 23/00, A01N 43/78, A01P 19/00, A01N 25/00, A01M 23/14, A01M 23/16, A01M 25/00, A01M 23/30, A01M 23/36

(54) **ATTRACTANTS FOR MICE**
LOCKSTOFFE FÜR MÄUSE
ATTRACTIFS POUR SOURIS

(30) Priority: 21.04.2016 US 201662325616 P
(43) Date of publication of application: 27.02.2019
(73) Proprietor: Gries, Gerhard J., Coquitlam, British Columbia V3C 4X7 (CA)
(72) Inventor: MUSSO, Antonia, Langley, British Columbia V2YON4 (CA); GRIES, Regine, Coquitlam British Columbia V3C 4X7 (CA); ZHAI, Huimin, Mississauga, Ontario L5J 4J7 (CA); TAKÁCS, Stephen J., Hope, British Columbia V0X1L5 (CA); GRIES, Gerhard, Coquitlam British Columbia V3C 4X7 (CA)
(74) Representative: Patentanwälte Bressel und Partner mbB
(86) International application number: PCT/CA2017/050498
(87) International publication number: WO 2017/181290

(56) References cited:
- WO-A1-2013/003946
- WO-A1-2014/186885
- WO-A2-2010/106352
- REX E. MARSH ET AL: "CHEMOSTERILANTS AS AN APPROACH TO RODENT CONTROL", PROCEEDINGS OF THE 4TH VERTEBRATE PEST CONFERENCE, (1970), 14, 31 March 1970 (1970-03-31), pages 55 - 63, XP055619083, Retrieved from the Internet <URL:https://pdfs.semanticscholar.org/dcb7/79b3a4ef95ce2e9f2a8e2e149fdd1802765d.pdf> [retrieved on 20190905]
- MUSSO, A.E.: "Contributions to the Development of Effective Food Baits and Pheromone Lures for Capturing Mice and Rats", THESIS FROM SIMON FRASER UNIVERSITY, 21 April 2016 (2016-04-21), British Columbia, Canada, pages 1 - 76, XP055580829, Retrieved from the Internet <URL:http://summit.sfu.ca/item/16339>
- MUSSO, A.E. ET AL.: "Effect of Male House Mouse Pheromone Components on Behavioral Responses of Mice in Laboratory and Field Experiments", JOURNAL OF CHEMICAL ECOLOGY, vol. 43, no. 3, 27 January 2017 (2017-01-27), pages 215 - 224, XP036200416
- NINOMIYA, K. ET AL.: "Female-attracting Property of Urinary Compounds in Male Mice", THE SCIENCE OF NATURE, vol. 77, no. 12, 1 December 1990 (1990-12-01), pages 586 - 588, XP055580840
- JEMIOLO, B. ET AL.: "Behavioural and Endocrine Response of Female Mice to Synthetic Analogues of Volatile Compounds in Male Urine", ANIMAL BEHAVIOR, vol. 33, no. 4, November 1985 (1985-11-01), pages 1114 - 1118, XP055431351
- OSADA, K. ET AL.: "The Identification of Attractive Volatiles in Aged Male Mouse Urine", CHEMICAL SENSES, vol. 33, 24 July 2008 (2008-07-24), pages 815 - 823, XP055083287
- BACCHINI, A. ET AL.: "Pheromone Binding Proteins of the Mouse, Mus musculus", EXPERIENTIA, vol. 48, no. 4, 15 April 1992 (1992-04-15), pages 419 - 421, XP009514497, ISSN: 0014-4754, DOI: 10.1007/BF01923448
- JEMIOLO, B. ET AL.: "Promotion of the Whitten Effect in Female Mice by Synthetic Analogs of Male Urinary Constituents", PROCEEDINGS FROM THE NATIONAL ACADEMY OF SCIENCES, vol. 83, no. 12, June 1986 (1986-06-01), pages 4576 - 4579, XP055074257
- DRICKAMER, L.C. ET AL.: "Use of Odor Baits in Traps to Test Reactions to Intra- and Interspecific Chemical Cues in House Mice Living in Outdoor Enclosures", JOURNAL OF CHEMICAL ECOLOGY, vol. 18, no. 12, December 1992 (1992-12-01), pages 2223 - 2250, XP009513087, ISSN: 0098-0331, DOI: 10.1007/BF00984947
- DRICKAMER, L.C. ET AL.: "Odors in Traps: Does Most Recent Occupant Influence Capture Rates for House Mice", JOURNAL OF CHEMICAL ECOLOGY, vol. 21, no. 5, May 1995 (1995-05-01), pages 541 - 555, XP009513085, ISSN: 0098-0331, DOI: 10.1007/BF02033700
- MOSSMAN, C.A. ET AL.: "Odor Preferences of Female House Mice (Mus domesticus) in Seminatural Enclosures", JOURNAL OF COMPARATIVE PSYCHOLOGY, vol. 110, no. 2, January 1996 (1996-01-01), pages 131 - 138, XP009514255
- BURGER, B.V.: "Mammalian Semiochemicals", TOPICS IN CURRENT CHEMISTRY, vol. 240, January 2005 (2005-01-01), pages 231 - 278, XP055130408
- HARVEY, S. ET AL.: "Pattern of Volatile Compounds in Dominant and Subordinate Male Mouse Urine", JOURNAL OF CHEMICAL ECOLOGY, vol. 15, no. 7, July 1989 (1989-07-01), pages 2061 - 2072, XP009513086, ISSN: 0098-0331, DOI: 10.1007/BF01207438

## Description

### TECHNICAL FIELD

The invention relates to the use of a composition, a device, and a method for attracting wild adult female mice.

### BACKGROUND

House mice are global pests. They cause damage by soiling food, spreading allergens, diminishing yields of agricultural crops, serving as reservoirs for disease-causing pathogens, endangering island seabird colonies, and by acting as an invasive species harming indigenous fauna (Wanless et al. 2007, Angel et al. 2009). These many adverse effects have prompted ongoing efforts to trap and poison mice. However, mice can exhibit neophobia (the fear of new objects) (Brigham & Sibley 1999). The lag time for neophobic rodents to become conditioned to the presence of newly placed traps, or trap boxes containing snap traps, and to enter them greatly reduces the effectiveness of mouse control efforts.
WO 2010/106352 A2 discloses a vertebrate trap for capturing, disabling and/or killing a vertebrate comprising an enclosure into which the vertebrate can enter to be captured, disabled and/or killed, and a pheromone component for attracting vertebrates into the enclosure. The trap may further comprise a poison component, that may be in combination with the pheromone component.
Rex E. Marsh et al: "Chemosterilants as an approach to rodent control", Proceedings of the 4th Vertebrate Pest Conference, (1970), 14, 31. March 1970, pages 55-63, discusses the specifications of ideal rodent chemosterilants and the advantages of chemosterilants over other methods of control, and compares the potential values of chemosterilants acting on females, males, and both sexes.
Jemiolo, B. et al.: "Behavioural and Endocrine Response of Female Mice to Synthetic Analogues of Volatile Compounds in Male Urine", Animal Behaviour, vol. 33. No. 4, 1985, p. 1114-1118, discloses that the urine of intact, adult male mice elicits more investigatory sniffing from female mice than does the urine of castrated males. When either of two androgen-dependent urinary compounds, 2-sec-butyl dihydrothiazole or dehydro-exo-brevicomin are added to castrate urine, its relative attractiveness remains the same. When both compounds are added to castrate urine, however, its activity is enhanced and the castrate urine becomes as attractive to females as whole, intact male urine. Females exposed to the reconstituted 'normal' urine for 3 min per day, displayed more frequent oestrus cycles. The two synthetic compounds are synergistic in the context of castrate urine, producing an olfactory message that behaviourally and physiologically mimics the activity of the normal biological signal.

### SUMMARY

The present invention relates to the use of a composition, a device, and a method for attracting female mice according to the independent claims. Embodiments of the invention are laid down in dependent claims and this description.
The composition for attracting a wild adult female mouse consists of a synthetic two-component blend consisting of 2-sec-butyl-4,5-dihydrothiazole and 3,4-dehydro-exo-brevicomin (hereinafter also called "additives") and one or more of a lethal agent and a chemosterilant, wherein the lethal agent is an anticoagulant or a toxicant.

The device for attracting a mouse includes a housing or a trap and the above-mentioned composition adjacent to, or included within, the housing or the trap.

The method for attracting a wild adult female mouse includes providing the above-mentioned composition.

### BRIEF DESCRIPTION OF THE DRAWINGS

FIG. 1 depicts a graph illustrating the total ion chromatograms of volatile components emanating from urine- and feces-soiled bedding material of adult male house mice and adult female house mice.
FIG. 2 depicts an illustration of an experimental design for behavioral experiments.
FIG. 3 depicts a graph showing the effect of the synthetic 2-component house mouse volatile blend (3,4-dehydro-exo-brevicomin ("DEB") and 2-sec-butyl-4,5-dihydrothiazole ("DHT") at a 1:1 ratio; 2 mg total; formulated in 10 g of mineral oil) on behavioral responses of house mouse females in Experiment 1.
FIG. 4 depicts an illustration of an additional experimental design for behavioral experiments.
FIG. 5 depicts a graph showing the effect of the synthetic 2-component house mouse volatile blend on trap captures of adult and juvenile male and female house mice in Experiment 2.
FIG. 6 depicts an example of a device according to one embodiment.
FIG. 7 depicts an example of a device according to another embodiment.
FIG. 8 depicts an example of a device according to another embodiment.
FIG. 9 depicts an example of a device according to another embodiment.
FIG. 10 depicts an example of a device according to another embodiment.
FIG. 11 depicts an example of a device according to another embodiment.
FIG. 12 depicts an example of a device according to another embodiment.
FIG. 13 depicts an example of a device according to another embodiment.

### DETAILED DESCRIPTION

The term "isolated" as used herein means separated from materials with which the compound is normally associated in a native state.

The term "purified" as used herein refers to material that has been isolated under conditions that reduce, or eliminate, the presence of unrelated materials, i.e., contaminants, including native materials from which the material is obtained. Purified material, substantially free of contaminants, can be 50% or more pure; 90% or more pure, or 99% or more pure. Purity can be evaluated by methods known in the art.

The term "synthetic" as used herein means artificially produced by chemical processes or other processes initiated by human energy, as opposed to compounds formed by natural processes.

The term "lethal" as used herein means sufficient to result in immobilization, knockdown and/or death of 50% or more, 55% or more, 60% or more, 65% or more, 70% or more, 75% or more, 80% or more, 85% or more, 90% or more, 95% or more, or 99% or more, mice.

The term "lethal agent" as used herein means an agent that is capable of immobilizing, knocking down, and/or killing 50% or more, 55% or more, 60% or more, 65% or more, 70% or more, 75% or more, 80% or more, 85% or more, 90% or more, 95% or more, or 99% or more, mice that are exposed to an appropriate dose, number or intensity over an appropriate amount of time.

The term "chemosterilant" as used herein means a substance that is capable of sterilizing 50% or more, 55% or more, 60% or more, 65% or more, 70% or more, 75% or more, 80% or more, 85% or more, 90% or more, 95% or more, or 99% or more, mice that are exposed to an appropriate dose, number or intensity of the substance over an appropriate amount of time.

The term "mouse" as used herein refers to at least one mouse of the genus *Mus,* including the house mouse (*Mus musculus).*

The term "attractant" as used herein refers to any composition or formulation that makes attractive to a mouse or mice, a habitat, food source or other site which may be frequented or traversed by a mouse or mice.

**.** The additives can be isolated and/or purified in various embodiments. In certain embodiments, the additives can include optical isomers. For example, suitable additives can include (1*R*,5*S*,7*R*)-3,4-dehydro-exo-brevicomin, (1*S*,5*R*,7*S*)-3,4-dehydro-exo-brevicomin, (*S*)-2-(*sec*-butyl)-4,5-dihydrothiazole, (*R*)-2-(*sec*-butyl)-4,5-dihydrothiazole, or mixtures thereof.

In embodiments including a lethal agent, the lethal agent can be a chemical that is capable of causing immobilization and/or death of one or more mice. The lethal agent is an anticoagulant or a toxicant. In certain embodiments, examples of suitable lethal agents are selected from warfarin ((*RS*)-4-hydroxy-3-(3-oxo-1-phenylbutyl)- 2*H*-chromen-2-one), chlorophacinone (2-[2-(4-chlorophenyl)-1-oxo-2-phenylethyl]indane-1,3-dione), diphacinone (2-(diphenylacetyl)-1*H*-indene-1,3(2*H*)-dione), bromadiolone (3-[3-[4-(4-bromophenyl)phenyl]-3-hydroxy-1-phenylpropyl]-2-hydroxychromen-4-one), difethialone (3-[3-[4-(4-bromophenyl)phenyl]-1-tetralinyl]-2-hydroxy-4-thiochromenone), brodifacoum (3-[3-[4-(4-bromophenyl)phenyl]-1,2,3,4-tetrahydronaphthalen-1-yl]-2-hydroxychromen-4-one), and combinations thereof. In certain embodiments, suitable toxicants can include bromethalin (N-methyl-2,4-dinitro-6-(trifluoromethyl)-*N*-(2',4',6'-tribromophenyl)aniline), cholecalciferol ((3β,5*Z*,7*E*)-9,10-secocholesta-5,7,10(19)-trien-3-ol), zinc phosphide (zinc phosphide/trizinc diphosphide), strychnine (strychnidin-10-one), and combinations thereof.

In embodiments including a chemosterilant, the chemosterilant can be a chemical that is capable of sterilizing one or more mice. For example, a suitable chemosterilant chemical that can sterilize female mice is selected from mestranol, quinoestrol, diethylstilbestrol, methyl testosterone, the 3-cyclopentyl ester of 17α-hexa-1'3'-diynyloestra-1,3,5(10)-trien-17β-ol, α-chlorhydrin, and 4-vinylcyclohexene diepoxide.

In certain embodiments, the described compositions is used with a food bait. Suitable food baits can include natural foodstuffs such as meat, cheese, eggs, and/or grains. For example, a food bait can include lard and cracklings, cereal flour (e.g., oat flour and/or rice flour), cereal bran (e.g., wheat bran), gelling agent(s) (e.g., gelatin and/or agar), sugar (e.g., fructose), oil(s) (e.g., safflower oil), emulsifier(s) (e.g., soy lecithin) and humectant(s) (e.g., carrageenan gum powder), water, chemical attractants (e.g., 2-hydroxy-3-methylcyclopent-2-en-1-one, 2,3-butadione, 3-methylbutanal, 5-methyl-(*E*)-2-hepten-4-one, 5-methyl-4-heptanone, γ-octalactone and/or butyric acid), and combinations thereof.

The composition described herein is used to attract one or more wild adult female mice. The composition can be used with bait, and, can optionally be included in a trap.

In certain embodiments, the composition including the additives in an amount of about 1% to about 99% of the composition can be used to attract one or more wild adult female mice. For example, the additives can be included in an amount of about 1% or more, about 2% or more, about 5% or more, about 7.5% or more, about 10% or more, about 12.5% or more, about 15% or more, about 17.5% or more, about 20% or more, about 22.5% or more, about 25% or more, about 27.5% or more, about 30% or more, about 32.5% or more, about 35% or more, about 37.5% or more, about 40% or more, about 42.5% or more, about 45% or more, about 47.5% or more, about 50% or more, about 52.5% or more, about 55% or more, about 57.5% or more, about 60% or more, about 62.5% or more, about 65% or more, about 67.5% or more, about 70% or more, about 72.5% or more, about 75% or more, about 77.5% or more, about 80% or more, about 82.5% or more, about 85% or more, about 87.5% or more, about 90% or more, about 92.5% or more, about 95% or more, about 97.5% or more, and about 99% or more, by weight of the composition.

In certain embodiments, the additives can be included in an amount of about 1% or less, about 2% or less, about 5% or less, about 7.5% or less, about 10% or less, about 12.5% or less, about 15% or less, about 17.5% or less, about 20% or less, about 22.5% or less, about 25% or less, about 27.5% or less, about 30% or less, about 32.5% or less, about 35% or less, about 37.5% or less, about 40% or less, about 42.5% or less, about 45% or less, about 47.5% or less, about 50% or less, about 52.5% or less, about 55% or less, about 57.5% or less, about 60% or less, about 62.5% or less, about 65% or less, about 67.5% or less, about 70% or less, about 72.5% or less, about 75% or less, about 77.5% or less, about 80% or less, about 82.5% or less, about 85% or less, about 87.5% or less, about 90% or less, about 92.5% or less, about 95% or less, about 97.5% or less, and about 99% or less, by weight of the composition. The composition can be used as a bait, and can optionally be included in a trap.

In certain embodiments, the composition can also include the lethal agent in an amount of about 1% to about 99% of the composition. The lethal agent can be a chemical that is capable of immobilizing or killing one or more mice. In certain embodiments, the lethal agent(s) can be included in an amount of about 1% or more, about 2% or more, about 5% or more, about 7.5% or more, about 10% or more, about 12.5% or more, about 15% or more, about 17.5% or more, about 20% or more, about 22.5% or more, about 25% or more, about 27.5% or more, about 30% or more, about 32.5% or more, about 35% or more, about 37.5% or more, about 40% or more, about 42.5% or more, about 45% or more, about 47.5% or more, about 50% or more, about 52.5% or more, about 55% or more, about 57.5% or more, about 60% or more, about 62.5% or more, about 65% or more, about 67.5% or more, about 70% or more, about 72.5% or more, about 75% or more, about 77.5% or more, about 80% or more, about 82.5% or more, about 85% or more, about 87.5% or more, about 90% or more, about 92.5% or more, about 95% or more, about 97.5% or more, and about 99% or more, by weight of the composition.

In certain embodiments, the lethal agent(s) can be included in an amount of about 1% or less, about 2% or less, about 5% or less, about 7.5% or less, about 10% or less, about 12.5% or less, about 15% or less, about 17.5% or less, about 20% or less, about 22.5% or less, about 25% or less, about 27.5% or less, about 30% or less, about 32.5% or less, about 35% or less, about 37.5% or less, about 40% or less, about 42.5% or less, about 45% or less, about 47.5% or less, about 50% or less, about 52.5% or less, about 55% or less, about 57.5% or less, about 60% or less, about 62.5% or less, about 65% or less, about 67.5% or less, about 70% or less, about 72.5% or less, about 75% or less, about 77.5% or less, about 80% or less, about 82.5% or less, about 85% or less, about 87.5% or less, about 90% or less, about 92.5% or less, about 95% or less, about 97.5% or less, and about 99% or less, by weight of the composition.

The composition can include the one or more chemosterilants in an amount of about 1% to about 99% of the composition. The chemosterilant(s) can be a chemical that is capable of sterilizing one or more mice. In certain embodiments, the chemosterilant(s) can be effective to sterilize female mice. In certain embodiments, the chemosterilant(s) can be included in an amount of about 1% or more, about 2% or more, about 5% or more, about 7.5% or more, about 10% or more, about 12.5% or more, about 15% or more, about 17.5% or more, about 20% or more, about 22.5% or more, about 25% or more, about 27.5% or more, about 30% or more, about 32.5% or more, about 35% or more, about 37.5% or more, about 40% or more, about 42.5% or more, about 45% or more, about 47.5% or more, about 50% or more, about 52.5% or more, about 55% or more, about 57.5% or more, about 60% or more, about 62.5% or more, about 65% or more, about 67.5% or more, about 70% or more, about 72.5% or more, about 75% or more, about 77.5% or more, about 80% or more, about 82.5% or more, about 85% or more, about 87.5% or more, about 90% or more, about 92.5% or more, about 95% or more, about 97.5% or more, and about 99% or more, by weight of the composition.

In certain embodiments, the chemosterilant(s) can be included in an amount of about 1% or less, about 2% or less, about 5% or less, about 7.5% or less, about 10% or less, about 12.5% or less, about 15% or less, about 17.5% or less, about 20% or less, about 22.5% or less, about 25% or less, about 27.5% or less, about 30% or less, about 32.5% or less, about 35% or less, about 37.5% or less, about 40% or less, about 42.5% or less, about 45% or less, about 47.5% or less, about 50% or less, about 52.5% or less, about 55% or less, about 57.5% or less, about 60% or less, about 62.5% or less, about 65% or less, about 67.5% or less, about 70% or less, about 72.5% or less, about 75% or less, about 77.5% or less, about 80% or less, about 82.5% or less, about 85% or less, about 87.5% or less, about 90% or less, about 92.5% or less, about 95% or less, about 97.5% or less, and about 99% or less, by weight of the composition.

In certain embodiments described herein, a composition that attracts one or more mice can be formulated as a granule, a solid block, a gel, a powder, a paste, a liquid, or as combinations thereof.

As can be appreciated, any of the compositions described herein can be included in a device for attracting one or more mice. In certain embodiments, the device can include a housing for receiving at least one mouse. The composition can be adjacent to, or included, within the housing. The housing can also include a food bait that is adjacent to the composition. The housing can allow a mouse to enter and leave the device after ingesting the composition. The housing can be configured so that a mouse can enter the device, but other animals are less likely to be able to enter the device. For example, the housing can contain a size-restrictive entryway, and the housing can optionally include a sharp turn. The device can be reusable (e.g., be rebaitable) or can be a single-use device.

The device can also include, or alternatively be, a trap. The trap can be an immobilizing trap (e.g., a sticky trap or a chamber trap), an impaling trap, a snap trap, an asphyxiation trap (e.g., a drowning trap, or a noose-based trap), an electrocution trap, a skull-fracturing piston trap, a catch-and-release trap, a self-resetting trap capable of multiple killings, or combinations thereof.

As can be appreciated, the device can trap, or kill, more than one mouse in certain embodiments. For example, a device for attracting one or more mice can include multiple single-use traps, a plurality of chambers that can each trap one mouse, or a single chamber that can trap or kill multiple mice in various embodiments.

Other variations to the device are also possible in certain embodiments. For example, a device can automatically kill and remove a mouse in certain examples. In such examples, a mouse can be lured into a trap housing that kills the mouse using, for example, an impaling trap, a compression trap, an asphyxiation trap, an electrocution trap, or a skull-fracturing piston trap. Once the mouse has been killed, the trap can reset itself releasing the mouse to fall out of both the trap housing and device. As can be appreciated, such devices can kill multiple mice without human intervention. In certain embodiments, such devices can be mechanically powered (using *e.g.,* a compressed gas cartridge) or can be electrically powered.

As can be appreciated, other devices are also possible in certain embodiments. For example, in certain embodiments, a device for attracting mice can be a dispensing device or a dispersing device which dispenses, or disperses, a composition as described herein. As can be appreciated, the composition in such embodiments can be an aerosolized liquid or the like.

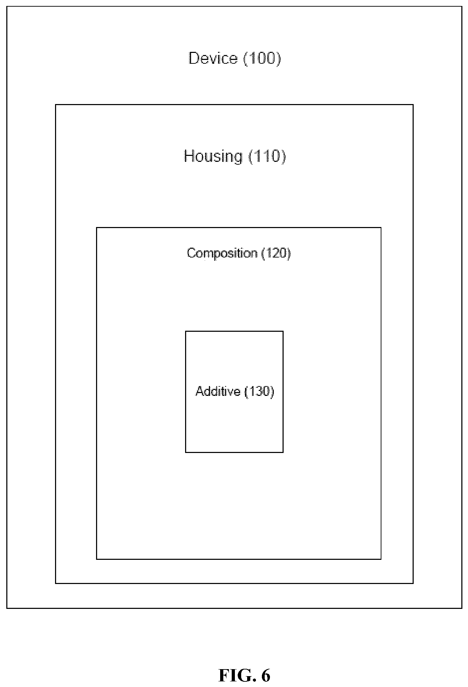

In certain embodiments, a device can include a housing for receiving a mouse, as well as the composition. Referring to FIG. 6, a device according to one embodiment is disclosed. Device (100) can include a housing (110). The housing (110) can include composition (120), which includes additive (130). In certain embodiment, the housing (110) can also include at least one food bait. In certain embodiments, the housing (110) can also include a trap. The composition (120) can be included within, or adjacent to, the trap within housing (110).

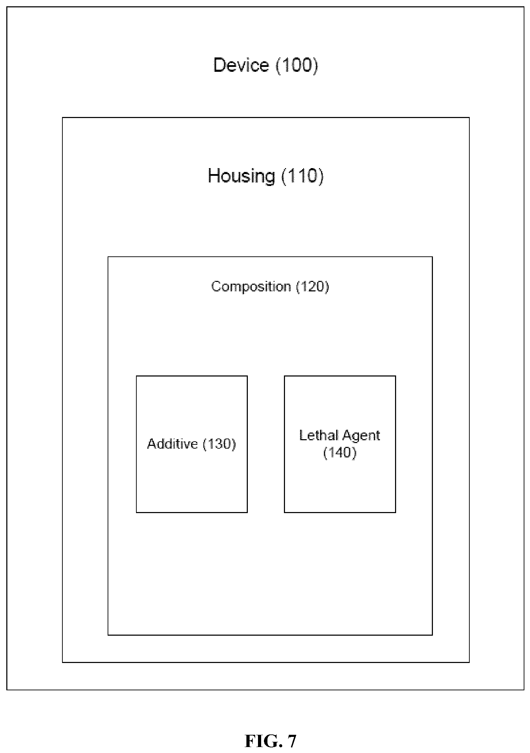

Referring to FIG. 7, a device according to an embodiment is disclosed. Device (100) can include a housing (110). The housing (110) can include composition (120), which includes additive (130) and lethal agent (140). In certain embodiments, housing (110) can also include at least one food bait. In certain embodiments, housing (110) can also include a trap. The composition (120) can be included within, or adjacent to, the trap within housing (110).

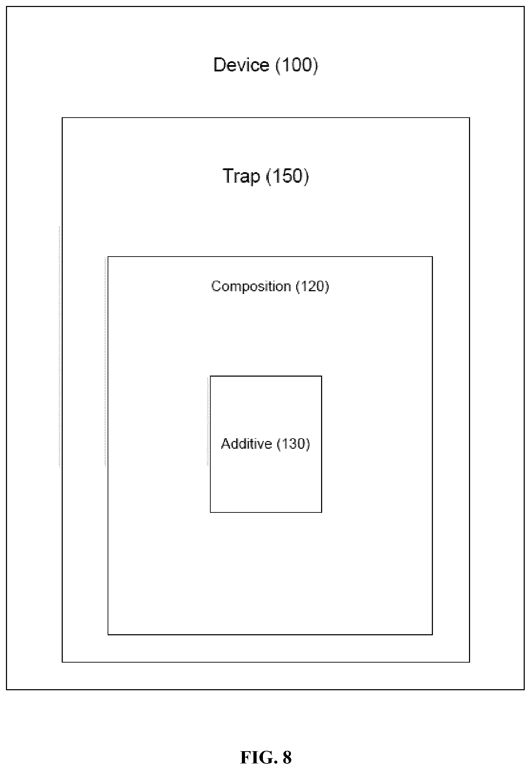

Referring to FIG. 8, a device according to an embodiment is disclosed. Device (100) can include trap (150). The trap (150) can include composition (120), which includes additive (130). In certain embodiments, the trap (150) can also include at least one food bait. In certain embodiments, trap (150) can also include a housing. The composition (120) can be included within or adjacent to the housing within trap (150).

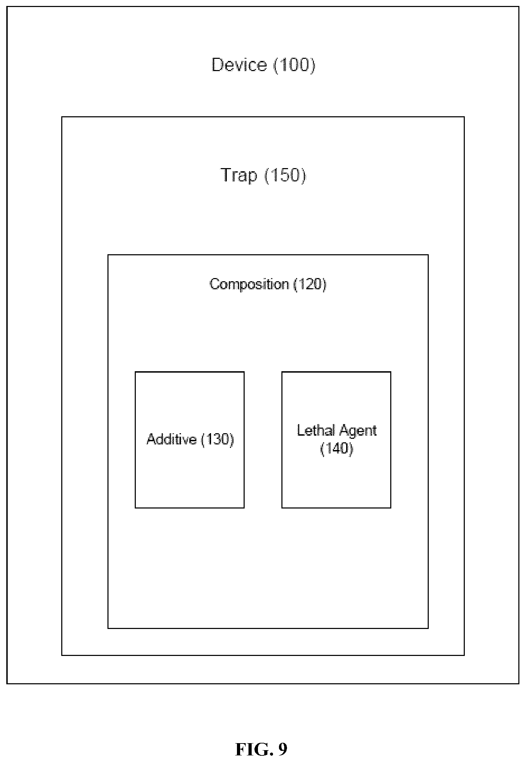

Referring to FIG. 9, a device according to an embodiment is disclosed. Device (100) can include trap (150). The trap (150) can include composition (120), which includes additive (130) and lethal agent (140). In certain embodiments, trap (150) can also include at least one food bait. In certain embodiments, trap (150) can also include a housing. The composition (120) can be included within, or adjacent to, the housing within trap (150).

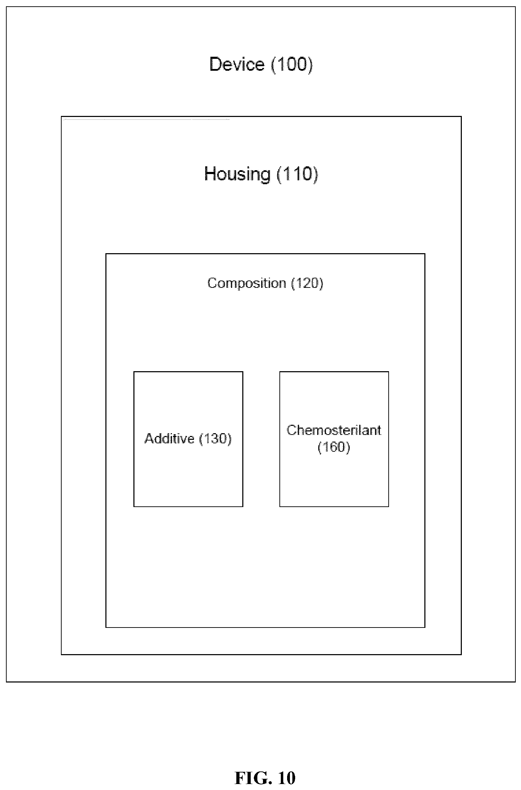

Referring to FIG. 10, a device according to an embodiment is disclosed. Device (100) can include housing (110). The housing (110) can include composition (120), which includes additive (130) and chemosterilant (160). In certain embodiments, the housing (110) can also include at least one food bait. In certain embodiments, the housing (110) can also include a trap. The composition (120) can be included within, or adjacent to, the trap within housing (110).

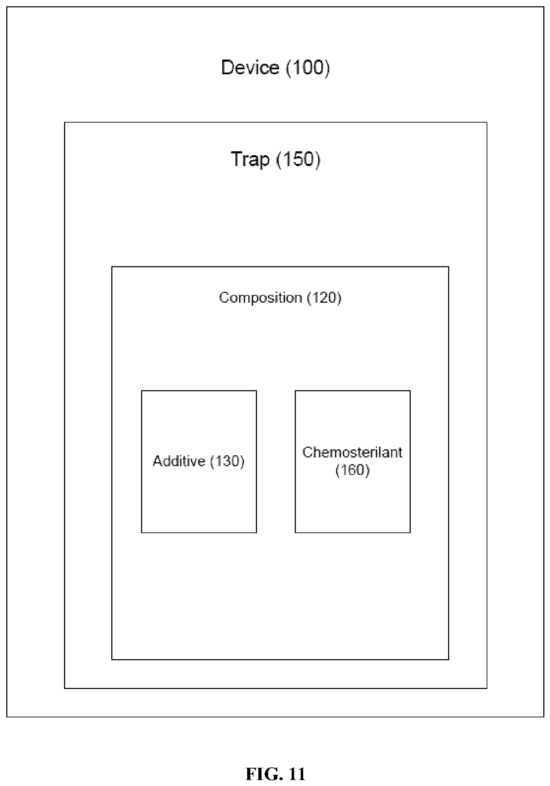

Referring to FIG. 11, a device according to an embodiment is disclosed. Device (100) can include trap (150). The trap (150) can include composition (120), which includes additive (130) and chemosterilant (160). In certain embodiments, trap (150) can also include at least one food bait. In certain embodiments, trap (150) can also include a housing. The composition (120) can be included within, or adjacent to, the housing within trap (150).

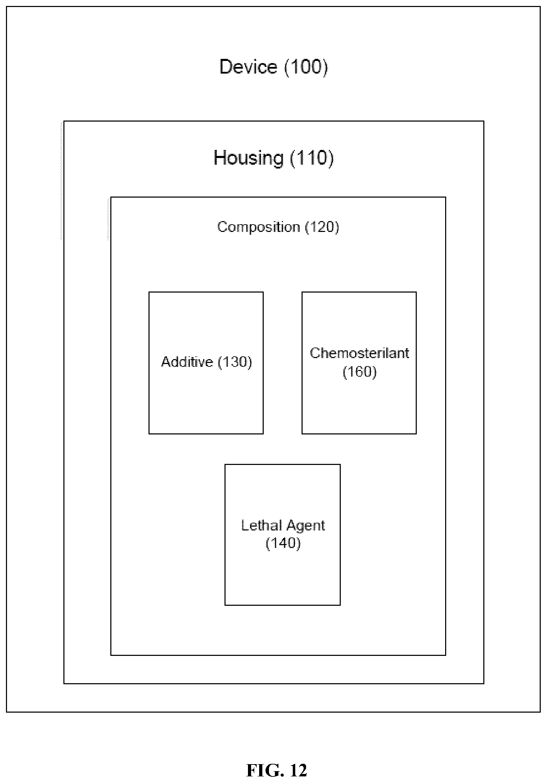

Referring to FIG. 12, a device according to an embodiment is disclosed. Device (100) can include housing (110). The housing (110) can include composition (120), which includes additive (130), lethal agent (140), and chemosterilant (160). In certain embodiments, the housing (110) can also include at least one food bait. In certain embodiments, the housing (110) can also include a trap. The composition (120) can be included within, or adjacent to, the trap within housing (110).

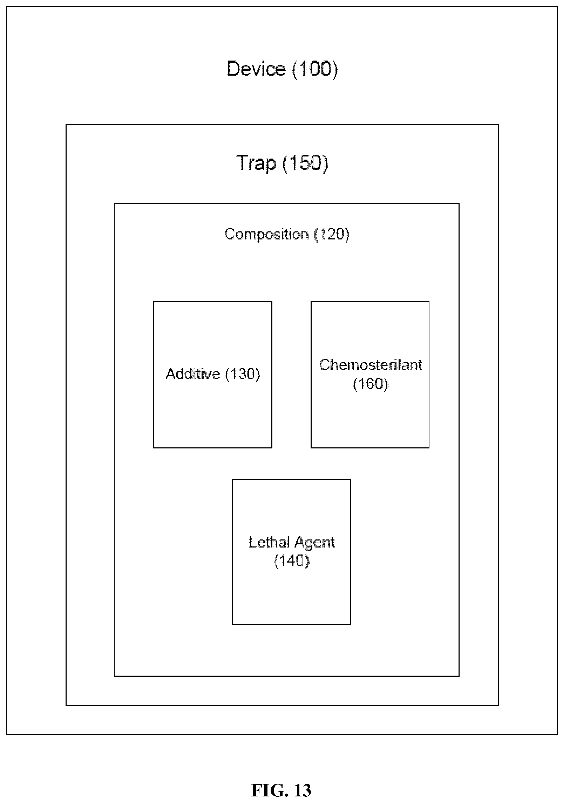

Referring to FIG. 13, a device according to an embodiment is disclosed. Device (100) can include trap (150). The trap (150) can include composition (120), which includes additive (130), lethal agent (140), and chemosterilant (160). In certain embodiments, the trap (150) can also include at least one food bait. In certain embodiments, the trap (150) can also include a housing. The composition (120) can be included within, or adjacent to, the housing within trap (150).

Any of the compositions described herein can be used to attract one or more wild adult female mice. The one or more mice can be attracted by providing any of the compositions described herein. The one or more mice can also be immobilized and/or killed by providing any of the compositions described herein with a lethal agent. The one or more mice can also be sterilized by providing any of the compositions described herein with a chemosterilant. The composition can be provided in a dose that can be sufficient to result in the attraction, and optionally, the sterilization and/or immobilization and/or death of one or more mice.

### EXAMPLES

### Source and maintenance of the mouse colony

House mice, *Mus musculus* (strain: CD-1; UACC protocol number 1159B-15), were obtained from Charles River Laboratories Ltd (Sherbrooke, Québec J1E 0B5, Canada) and housed in the Animal Research Centre of Simon Fraser University ("SFU"). On arrival, mice were assigned to four groups of five male mice each and four groups of five female mice each, accommodated in cages (50 cm × 40 cm × 20 cm) lined with commercial corn cob bedding (Anderson's Bed o'cobs, The Andersons Inc. Maumee, OH 43537, USA), provided with Nalgene toys, running wheels (Jaimesons Pet Food Distributers, Richmond, BC V4G 1C9, Canada), and provisioned with commercial rodent food (LabDiet^{®} Certified Rodent Diet, LabDiet, St Louis, MO 64144, USA) as well as water *ad libitum.*

### Capture of headspace odorants from urine- and feces-soiled bedding of male or female house mice

Urine- and feces-stained bedding was removed and replaced with fresh bedding at weekly intervals. Soiled bedding (100 g) from male mice and female mice were placed into separate cylindrical Pyrex glass chambers, each connected to a Pyrex glass tube (15 cm × 5 mm OD) filled with 200 mg of the absorbent Porapak Q. Charcoal-filtered air was drawn through each chamber and the Porapak Q volatile trap at 1 liter per min for 24 h. Processing clean bedding from a control cage without mice in the same way helped differentiate between bedding and rodent volatiles in subsequent analyses. Porapak Q-captured volatiles were desorbed with two consecutive rinses of pentane (2 ml) and ether (2 ml). Pentane and ether extracts were combined and, after adding dodecyl acetate as an internal standard for compound quantification, were concentrated under a stream of nitrogen to 250 µl per sample.

### Analyses of Porapak Q headspace volatile extract of soiled-bedding odorants from male and female mice by gas chromatography-mass spectrometry (GC-MS)

Aliquots (2 µl) of Porapak Q extracts of soiled bedding odorants from male house mice and female house mice were analyzed on a Varian Ion Trap GC-MS fitted with a DB-5 MS GC column (30 m × 0.25 mm ID), setting the injector port and ion trap to 250 °C and using helium as the carrier gas at a flow of 35 cm per sec, with the following temperature program: 50 °C for 5 min, 10 °C per min until 280 °C (10 min). Odorants were identified by comparing their retention indices (relative to straight chain alkanes) and mass spectra with those reported in the literature and with those of authentic standards that were available from previous work, purchased from suppliers (Sigma Aldrich Company, St. Louis, MO 63103, USA; Aldrich Chemical Company Inc., Milwaukee, WI 53201, USA; Alfa Aesar, Heysham, LA3 2XY England), or synthesized (2-*sec*-butyl-4,5-dihydrothiazole and 3,4-dehydro-*exo*-brevicomin).

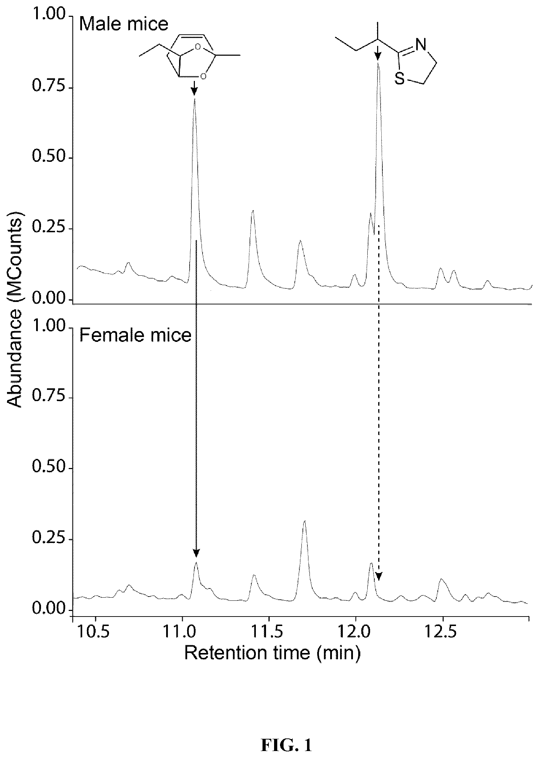

The analyses are depicted in FIG. 1 and revealed complex odor blends emanating from soiled bedding of male mice and female mice.

Many volatile compounds were common in Porapak Q headspace volatile extracts of bedding soiled by mice of either sex, but 2-*sec*-butyl-4,5-dihydrothiazole was found only in the bedding of male house mice and 3,4-dehydro-*exo*-7-ethyl-5-methyl-6.8-dioxabicyclo[3.2.1]octane (3,4-dehydro-*exo*-brevicomin) was found to be 7 times more prevalent in headspace volatiles of male house mice bedding as depicted in FIG. 1. These two compounds together had been previously classed as a primer pheromone because they reportedly induce estrous and decrease the age at which female house mice reach sexual maturity (Jemiolo et al. 1986). However, they were not known to have any behavioral function, which would allow them also to be classed as a releaser pheromone.

### EXAMPLE 1

### Test for behavioral function of 2-component composition

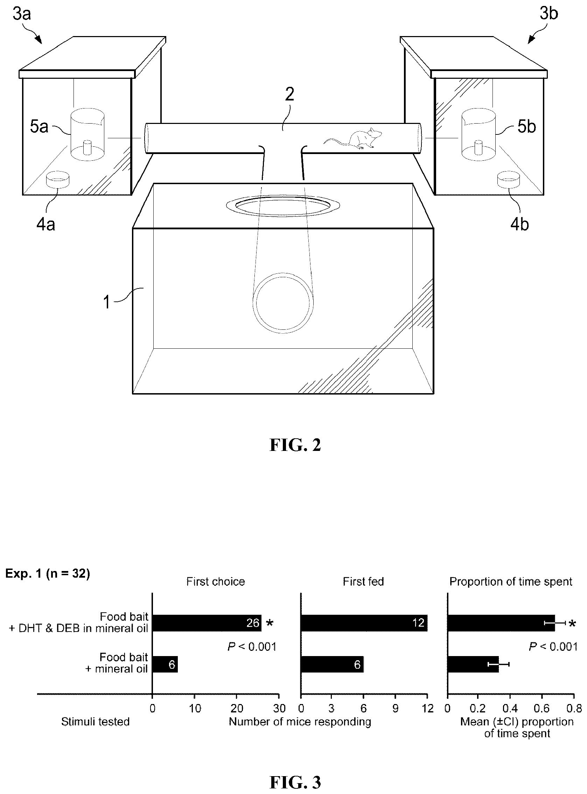

The olfactometer, illustrated in FIG. 2, for Experiment 1 consisted of three clear Plexiglas chambers (**1:** 40 cm × 20 cm × 30 cm; **3a** and **3b:** each 60 cm × 30 cm × 40 cm) interconnected by a Pyrex glass T-tube (**2;** stem: 65 cm long, side arms: 45 cm long, all 10 cm in diameter). For each replicate, a single mouse was deprived of food, but not water, for 4-6 h before being placed into chamber **1** which was illuminated by dim red light to facilitate observations of the mouse's position. The mouse was allowed to enter the stem of the T-tube (**2**) on its own accord in response to test stimuli, which were randomly assigned to chamber **3a** or **3b.**

FIG. 2 depicts the olfactometer used in Experiment 1. The olfactometer includes a T-tube design used to test behavioral responses of house mice, *Mus musculus,* to test stimuli in Experiment 1. The design includes: (**1**) a release chamber (aquarium: L × W × H; 40 × 20 × 30 cm) for placement of a mouse at the onset of a bioassay; (**2**) a T-tube (stem: 65 cm long, side arms: 45 cm long, all 10 cm in diameter); (**3a, 3b**) stimulus chambers (aquaria: each 60 × 30 × 40 cm) housing test stimuli; (**4**) Petri dish with food bait; and (**5**) a scintillation vial (2.8 cm × 5.75 cm) containing 10 g of mineral oil that was laced, or not, with the synthetic 2-component male house mouse pheromone.

For Experiment 1, both chambers of the olfactometer were baited with 1 g of a cereal-based food bait (Musso et al. 2014) in a Petri dish (**4;** 3 cm diameter). The treatment stimulus also comprised 2 mg of a 1:1 blend of two compounds (2-sec-butyl-4,5-dihydrothiazole and 3,4-dehydro-exo-brevicomin) (each >98% chemically pure), which were formulated in 10 g of mineral oil and pipetted into a 20-ml scintillation vial (**5a;** Wheaton Industries Inc., Millville, NJ 08332, USA). A control scintillation vial (**5b**) contained the same amount of mineral oil but lacked the two volatile compounds. Each scintillation vial was placed in a 150-ml beaker (**6a**, **6b**), which was covered with wire mesh (Phifer Inc., Tuscaloosa, Alabama, 35403-1700, USA) to prevent mice from contacting the vial or its contents.

For each bioassay, a single mouse was tested and the following data were recorded: 1) the treatment or control chamber the mouse entered first with all four paws ("first choice data"), 2) the chamber in which it first fed on the food bait ("first-feeding data"), and 3) the position of the mouse at each of 40 15-sec intervals. Position data were then used to calculate the proportion of time a mouse spent in the treatment or control chamber ("time spent data").

Following each replicate, the chambers and T-tube were cleaned with a Percept^{®} disinfectant detergent (Virox Technologies Inc. Mississaugua ON L5N 5M4, Canada) and wiped with 70% ethanol.

Experiment 1 tested the effect of the synthetic two-component blend on the response of female mice.

For Experiment 1, first-choice data and first-feeding data were analyzed using a Chisquare test with Yate's correction for continuity (α = 0.05). Time-spent data measurements were analyzed by comparing the mean proportions of time points recorded in control and treatment arenas, using a *t*-test (α = 0.05).

In Experiment 1, female house mice (n = 32) more often entered first the treatment arena containing the blend of 2-*sec*-butyl-4,5-dihydrothiazole and 3,4-dehydro-*exo*-brevicomin than the control arena as depicted in FIG. 3 (χ² = 11.28; *P* < 0.001), but they did not feed first more often in the treatment arena than in the control arena (χ² = 1.39; *P* > 0.05).

Additionally in Experiment 1, female house mice spent twice as much time in the treatment arena containing the blend of 2-*sec*-butyl-4,5-dihydrothiazole and 3,4-dehydro-*exo-*brevicomin than in the control arena as further depicted in FIG. 3 (*t* = 6.95, *P* < 0.001).

The results of Experiment 1 suggest, surprisingly, that the two-component blend had a significant releaser pheromone effect on female house mice influencing both their first choice of arena to enter and where the female house mice spent most of their time during the bioassays. Despite the positive data obtained with laboratory-strain female house mice, it was considered essential to obtain definitive field data prior to reaching any conclusion as to whether the blend functions as a releaser pheromone under natural conditions.

### EXAMPLE 2

### Responses of wild house mice to the synthetic two-component blend in a field experiment

Experiment 2 was run in the field from January 22, 2015 to September 25, 2015, and evaluated the effect of the synthetic two-component blend on trap captures of wild mice. Experimental replicates were set up along the interior walls of a retirement home, a floral conservatory, and a horse barn, and along the exterior walls of a poultry barn, all in the Lower Mainland of British Columbia. Each replicate (N = 72) consisted of paired trap boxes (PROTECTA^{®} Mouse, Bell Laboratories Inc., Madison, WI 53704, USA) each armed with a snap trap (Victor^{®} M325 M7 Pro mouse trap, Woodstream Co. Lititz, PA 175543, USA), with 50-cm spacing between boxes in each pair, and at least 2 m between pairs.

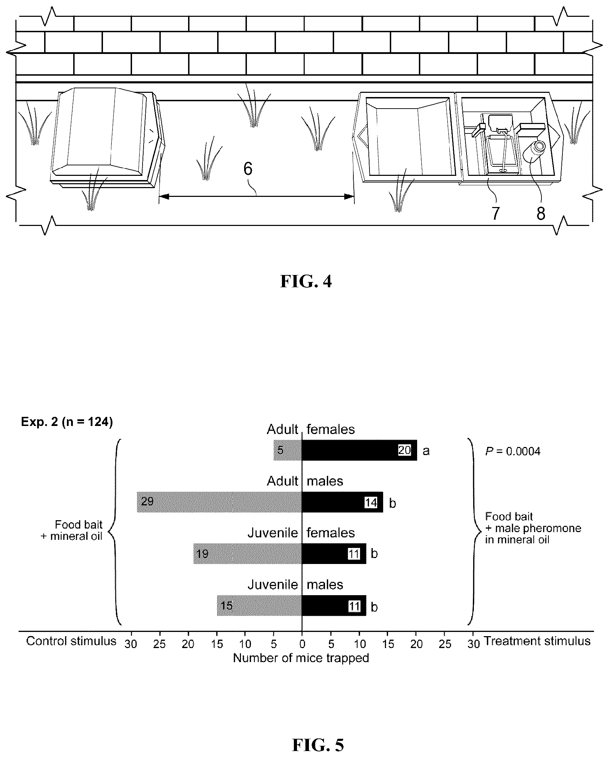

The experimental setup of one of 72 experimental replicates of paired trap boxes (6) deployed along the interior or exterior walls of buildings utilized in Experiment 2 is depicted in FIG. 4. Each setup included 50-cm spacings between the respective trap boxes **(6)** in each pair, and at least 5 m between pairs of trap boxes. Each box **(6)** contained a snap trap **(7)** that was baited with a food bait and fitted with a custom-designed scintillation vial (**8;** 2.1 cm × 4 cm) containing 10 g of mineral oil that was laced, or not, with synthetic male house mouse pheromone (2 mg) utilized in Experiment 1.

All boxes and snap traps were checked every 48 h to 72 h, and test stimuli (food lure, male house mouse pheromone blend in mineral oil, and mineral oil) were replaced at each visit. Whenever mice had been captured, their age (juvenile or adult) and sex were recorded, and new trap boxes and snap traps were deployed, thus ensuring that the odor of captured mice did not affect future captures.

Capture data of mice in treatment and control traps were analyzed using a logistic regression performed in R (v.3,4,3,Urbanek & Bibiko; R Development Core Team 20150) and plotted separately for adult female mice, adult male mice, juvenile female mice, and juvenile male mice. The probabilities of trapping mice in these four groups were analyzed by multiple comparisons using the Tukey method.

In Experiment 2, snap traps in treatment boxes baited with the two-component blend captured 20 adult female house mice, whereas snap traps in control boxes captured only 5 adult females as depicted in FIG. 5. Conversely, snap traps in treatment boxes baited with the two-component blend captured only 14 adult male house mice, whereas snap traps in control boxes captured 29 adult male house mice. Captures of juvenile mice in treatment and control boxes were similar.

Logistic regression analyses of trapping data revealed significant differences (residual deviance = 7.71 *P* = 0.0004) based on the age/sex group of mice [adult females, adult males, juvenile females or juvenile males]. Multiple comparisons of trapping probabilities further indicated that the two-component blend had a significant effect (Tukey; *P* < 0.05). The probability of an adult female mouse being captured in a treated trap relative to the control was 0.8 whereas the similar probabilities for adult males, juvenile females, or juvenile males were 0.33, 0.37, and 0.42, respectively.

The results of Experiment 2 constitute unexpected evidence that the two-component blend of 2-*sec*-butyl-4,5-dihydrothiazole and 3,4-dehydro-*exo*-brevicomin attract adult females, and could potentially be used to improve their captures in traps baited with a food bait or their ingestion of a food bait laced with a lethal or chemosterilant substance. These field data strongly support the conclusion that the synthetic, two-component blend of 2-*sec*-butyl-4,5-dihydrothiazole and 3,4-dehydro-*exo*-brevicomin can be classed as a releaser pheromone that mediates the behavior of adult female house mice.

The following documents are referenced: Angel, A., R. M. Wanless, and J. Cooper. 2009. Review of impacts of the introduced house mouse on islands in the Southern Ocean: are mice equivalent to rats? Biological Invasions 11:1743-1754; Brigham, A. J. and R. M. Sibly. 1999. A review of the phenomenon of neophobia. In Cowan, D. P., Feare, C. J. (Eds): Advancves in vertebrate pest management. Filander, Verlag, Furth, Germany; Jemiolo, B., S. Harvey, and M. Novotny. 1986. Promotion of the Whitten effect in female mice by synthetic analogs of male urinary constituents. Proceedings of the National Academy of Sciences 83: 4576-4579; Musso, A.E., S.J. Takacs, R.M. Gries and G.J. Gries. 2014. New compositions and methods for attracting and stimulating feeding by mice and rats. Patent Cooperation Treaty Patent Application Publication No. WO 2014/186885; Wanless, R. M., A. Angel, R. J. Cuthbert, G. M. Hilton, and P. G. Ryan. 2007. Can predation by invasive mice drive seabird extinctions? Biology letters 3:241-244.

As used herein, all percentages (%) are percent by weight of the total composition, also expressed as weight/weight %, % (w/w), w/w, w/w % or simply %, unless otherwise indicated. Also, as used herein, the terms "wet" refers to relative percentages of the coating composition in a dispersion medium (e.g. water); and "dry" refers to the relative percentages of the dry coating composition prior to the addition of the dispersion medium. In other words, the dry percentages are those present without taking the dispersion medium into account. Wet admixture refers to the coating composition with the dispersion medium added. "Wet weight percentage", or the like, is the weight in a wet mixture; and "dry weight percentage", or the like, is the weight percentage in a dry composition without the dispersion medium. Unless otherwise indicated, percentages (%) used herein are dry weight percentages based on the weight of the total composition.

The scope is defined by the claims appended hereto.

## Claims

1. The use of a composition consisting of:
a synthetic two-component blend consisting of 2-sec-butyl-4,5-dihydrothiazole and 3,4-dehydro-exo-brevicomin; and
one or more of a lethal agent and a chemosterilant, wherein the lethal agent is an anticoagulant or a toxicant;
the synthetic two-component blend for attracting a wild adult female mouse.

2. The use of claim 1, wherein the one or more of a lethal agent and a chemosterilant is at least a lethal agent.

3. The use of claim 2, wherein the composition comprises a dose of the lethal agent sufficient to kill or immobilize a mouse.

4. The use of claim 2 or 3, wherein the anticoagulant is selected from one or more of warfarin ((RS)-4-hydroxy-3-(3-oxo-1-phenylbutyl)- 2H-chromen-2-one), chlorophacinone (2-[2-(4-chlorophenyl)-1-oxo-2-phenylethyl]indane-1,3-dione), diphacinone (2-(diphenylacetyl)-1H-indene-1,3(2H)-dione), bromadiolone (3-[3-[4-(4-bromophenyl)phenyl]-3-hydroxy-1-phenylpropyl]-2-hydroxychromen-4-one), difethialone (3-[3-[4-(4-bromophenyl)phenyl]-1-tetralinyl]-2-hydroxy-4-thiochromenone), and brodifacoum (3-[3-[4-(4-bromophenyl)phenyl]-1,2,3,4-tetrahydronaphthalen-1-yl]-2-hydroxychromen-4-one).

5. The use of any one of claims 2 to 4, wherein the toxicant is selected from one or more of bromethalin (N-methyl-2,4-dinitro-6-(trifluoromethyl)-N-(2',4',6'-tribromophenyl)aniline), cholecalciferol ((3β,5Z,7E)-9,10-secocholesta-5,7,10(19)-trien-3-ol), zinc phosphide (zinc phosphide/trizinc diphosphide), and strychnine (strychnidin-10-one).

6. The use of any of claims 1 to 5, wherein the one or more of a lethal agent and a chemosterilant is at least a chemosterilant for sterilizing female mice, wherein the chemosterilant is selected from one or more of mestranol, quinoestrol, diethylstilbestrol, methyl testosterone, 3-cyclopentyl ester of 17α-hexa-1'3'-diynyloestra-1,3,5(10)-trien-17β-ol, α-chlorhydrin, and 4-vinylcyclohexene diepoxide.

7. The use of any one of claims 1 to 6, wherein the composition is a granule, a powder, a solid block, a gel, a paste, a liquid, or a combination thereof.

8. The use of any one of claims 1 to 7, wherein the composition is used with a food bait.

9. A device for a mouse comprising:
a housing or a trap; and
the composition of any one of claims 1 to 6; and
wherein the composition is adjacent to, or included within, the housing or the trap.

10. The device of claim 9 comprises the housing, wherein the housing is configured to receive a mouse.

11. The device of claim 9 comprises the trap, wherein the trap comprises one or more of an immobilizing trap, an impaling trap, a snap trap, an asphyxiation trap, an electrocution trap, a catch-and-release trap, and a skull-fracturing piston trap.

12. A method of attracting the wild adult female mouse, the method comprising: providing the composition of any one of claims 1 to 6.

13. The method of claim 12, further comprising providing at least one food bait.

14. The methods of any one of claims 12 or 13, wherein the composition is provided in a trap.

15. The method of claim 14, wherein the trap comprises one or more of an immobilizing trap, an impaling trap, a snap trap, an asphyxiation trap, an electrocution trap, a catch-and-release trap, and a skull-fracturing piston trap.

## Patentansprüche

1. Verwendung einer Zusammensetzung, bestehend aus:
einer synthetischen Zweikomponentenmischung aus 2-sec-Butyl-4,5-dihydrothiazol und 3,4-Dehydro-exo-brevicomin; und
einem oder mehreren eines tödlichen Substanz und eines Chemosterilisators, wobei die tödliche Substanz ein Antikoagulans oder ein Giftstoff ist;
wobei die synthetische Zweikomponentenmischung dazu dient, eine erwachsene weibliche Wildmaus anzulocken.

2. Verwendung nach Anspruch 1, wobei das eine oder mehrere einer tödlichen Substanz und eines Chemosterilisators mindestens eine tödliche Substanz umfassen.

3. Verwendung nach Anspruch 2, wobei die Zusammensetzung eine Dosis der tödlichen Substanz umfasst, die ausreicht, um eine Maus zu töten oder bewegungsunfähig zu machen.

4. Verwendung nach Anspruch 2 oder 3, wobei das Antikoagulans aus einem oder mehreren der folgenden Stoffe ausgewählt ist: Warfarin ((RS)-4-Hydroxy-3-(3-oxo-1-phenylbutyl) - 2H-Chromen-2-on), Chlorophacinon (2-[2-(4-Chlorphenyl)-1-oxo-2-phenylethyl]indan-1,3-dion), Diphacinon (2-(Diphenylacetyl)-1H-inden-1,3(2H)-dion), Bromadiolon (3-[3-[4-(4-Bromphenyl)phenyl]-3-hydroxy-1-phenylpropyl]-2-hydroxychromen-4-on), Difethialon (3-[3-[4-(4-Bromphenyl)phenyl]-1-tetralinyl]-2-hydroxy -4-thiochromenon) und Brodifacoum (3-[3-[4-(4-Bromphenyl)phenyl]-1,2,3,4-tetrahydronaphthalin-1-yl]-2-hydroxychromen-4-on).

5. Verwendung nach einem der Ansprüche 2 bis 4, wobei der Giftstoff aus einem oder mehreren der folgenden ausgewählt ist: Bromethalin (N-Methyl-2,4-dinitro-6-(trifluormethyl)-N-(2',4',6'-tribromphenyl)anilin), Cholecalciferol ((3β,5Z,7E)-9,10-Secocholesta-5,7,10(19)-trien-3-ol), Zinkphosphid (Zinkphosphid/Trizinkdiphosphid) und Strychnin (Strychnidin-10-on).

6. Verwendung nach einem der Ansprüche 1 bis 5, wobei das eine oder mehrere einer tödlichen Substanz und eines Chemosterilisators zumindest ein Chemosterilisator zur Sterilisierung weiblicher Mäuse ist, wobei der Chemosterilisator aus einem oder mehreren der folgenden ausgewählt ist: Mestranol, Quinoestrol, Diethylstilbestrol, Methyltestosteron, 3-Cyclopentylester von 17α-Hexa-1'3'-diynyloestra-1,3,5(10)-trien-17β-ol, α-Chlorhydrin und 4-Vinylcyclohexen-Diepoxid.

7. Verwendung nach einem der Ansprüche 1 bis 6, wobei die Zusammensetzung ein Granulat, ein Pulver, ein fester Block, ein Gel, eine Paste, eine Flüssigkeit oder eine Kombination davon ist.

8. Verwendung nach einem der Ansprüche 1 bis 7, wobei die Zusammensetzung zusammen mit einem Futterköder verwendet wird.

9. Vorrichtung zur Bekämpfung von Mäusen, umfassend:
ein Gehäuse oder eine Falle; und
die Zusammensetzung gemäß einem der Ansprüche 1 bis 6; und
wobei die Zusammensetzung an das Gehäuse oder die Falle angrenzt oder in diesem bzw. dieser enthalten ist.

10. Vorrichtung nach Anspruch 9, umfassend das Gehäuse, wobei das Gehäuse so ausgebildet ist, dass es eine Maus aufnehmen kann.

11. Vorrichtung nach Anspruch 9, umfassend die Falle, wobei die Falle eine oder mehrere der folgenden Fallen umfasst: eine Immobilisierungsfalle, eine Aufspießfalle, eine Schnappfalle, eine Erstickungsfalle, eine Elektrokutionfalle, eine Fang-und-Freilass-Falle und eine Kolbenfalle zum Brechen des Schädels.

12. Verfahren zum Anlocken wildlebender erwachsener weiblicher Mäuse, wobei das Verfahren umfasst: Bereitstellen der Zusammensetzung gemäß einem der Ansprüche 1 bis 6.

13. Verfahren nach Anspruch 12, das ferner das Bereitstellen mindestens eines Futterköders umfasst.

14. Verfahren nach einem der Ansprüche 12 oder 13, wobei die Zusammensetzung in einer Falle bereitgestellt wird.

15. Verfahren nach Anspruch 14, wobei die Falle eine oder mehrere der folgenden Fallen umfasst: eine Immobilisierungsfalle, eine Aufspießfalle, eine Schnappfalle, eine Erstickungsfalle, eine Elektrokutionfalle, eine Fang-und-Freilass-Falle und eine Kolbenfalle zum Brechen des Schädels.

## Revendications

1. Utilisation d'une composition constituée:
d'un mélange synthétique à deux composants composé de 2-sec-butyl-4,5-dihydrothiazole et de 3,4-déhydro-exo-brevicomine; et
d'un ou plusieurs agents parmi un agent létal et un chimio-stérilisant, l'agent létal étant un anticoagulant ou une substance toxique;
le mélange synthétique à deux composants étant destiné à attirer une souris femelle adulte sauvage.

2. Utilisation de la revendication 1, dans laquelle le ou les agents parmi un agent létal et un chimio-sterilisant comprennent au moins un agent létal.

3. Utilisation de la revendication 2, dans laquelle la composition comprend une dose de l'agent létal suffisante pour tuer ou immobiliser une souris.

4. Utilisation de la revendication 2 ou 3, dans laquelle l'anticoagulant est choisi parmi un ou plusieurs des composés suivants : la warfarine ((RS)-4-hydroxy-3-(3-oxo-1-phénylbutyl) - 2H-chromène-2-one), la chlorophacinone (2-[2-(4-chlorophényl)-1-oxo-2-phényléthyl]indane-1,3-dione), la diphacinone (2-(diphénylacétyl)-1H-indène-1,3(2H)-dione), bromadiolone (3-[3-[4-(4-bromophényl)phényl]-3-hydroxy-1-phénylpropyl]-2-hydroxychromène-4-one), diféthialone (3-[3-[4-(4-bromophényl)phényl]-1-tétralinyl]-2-hydroxy -4-thiochroménone), et le brodifacoum (3-[3-[4-(4-bromophényl)phényl]-1,2,3,4-tétrahydronaphtalène-1-yl]-2-hydroxychromène-4-one).

5. Utilisation de l'une quelconque des revendications 2 à 4, dans laquelle la substance toxique est choisie parmi une ou plusieurs des substances suivantes : la brométhaline (N-méthyl-2,4-dinitro-6-(trifluorométhyl)-N-(2',4',6'-tribromophényl)aniline), le cholécalciférol ((3β,5Z,7E)-9,10-sécocolesta-5,7,10(19)-triène-3-ol), le phosphure de zinc (phosphure de zinc/diphosphure de trizinc) et la strychnine (strychnidine-10-one).

6. Utilisation de l'une quelconque des revendications 1 à 5, dans laquelle le ou les agents, parmi un agent létal et un chimio-stérilisant, sont au moins un chimio-stérilisant destiné à la stérilisation de souris femelles, ledit chimio-stérilisant étant choisi parmi un ou plusieurs des composés suivants : le mestranol, le quinoestrol, le diéthylstilbestrol, méthyl-testostérone, l'ester 3-cyclopentylique du 17α-hexa-1'3'-diynyloestra-1,3,5(10)-triène-17β-ol, l'α-chlorhydrine et le diépoxyde de 4-vinylcyclohexène.

7. Utilisation de l'une quelconque des revendications 1 à 6, dans laquelle la composition se présente sous forme de granulés, de poudre, de bloc solide, de gel, de pâte, de liquide ou d'une combinaison de ceux-ci.

8. Utilisation de l'une quelconque des revendications 1 à 7, dans laquelle la composition est utilisée avec un appât alimentaire.

9. Dispositif destiné à une souris, comprenant:
un boîtier ou un piège; et
la composition de l'une quelconque des revendications 1 à 6; et
dans lequel la composition est adjacente au boîtier ou au piège, ou incluse dans ceux-ci.

10. Le dispositif de la revendication 9 comprend le boîtier, lequel est conçu pour pouvoir accueillir une souris.

11. Le dispositif de la revendication 9 comprend le piège, ledit piège comprenant un ou plusieurs des pièges suivants : un piège d'immobilisation, un piège à broche, un piège à ressort, un piège par asphyxie, un piège par électrocution, un piège de capture et de remise en liberté et un piège à piston destiné à fracturer le crâne.

12. Procédé pour attirer des souris femelles adultes vivant à l'état sauvage, ledit procédé comprenant: la mise à disposition de la composition de l'une des revendications 1 à 6.

13. Procédé de la revendication 12, comprenant en outre la mise à disposition d'au moins un appât alimentaire.

14. Procédé de l'une des revendications 12 ou 13, dans lequel la composition est placée dans un piège.

15. Procédé de la revendication 14, dans lequel le piège comprend un ou plusieurs des pièges suivants : un piège d'immobilisation, un piège à broche, un piège à ressort, un piège par asphyxie, un piège par électrocution, un piège de capture et de remise en liberté et un piège à piston provoquant une fracture du crâne.
